# FASCICULE DE BREVET EUROPEEN

(11) **EP 3 711 010 B1**
(45) Date de publication et mention de la délivrance du brevet: **09.07.2025**
(21) Numéro de dépôt: 18800648.0
(22) Date de dépôt: 14.11.2018
(51) Int. Cl.: G06Q 30/0251, G06Q 30/02, H04N 7/18, H04N 1/00

(54) **DISPOSITIFS ET PROCÉDÉS DE PARTAGE ET D'AFFICHAGE D'IMAGE**
VORRICHTUNGEN UND VERFAHREN ZUR GEMEINSAMEN NUTZUNG UND ANZEIGE VON BILDERN
DEVICES AND METHODS FOR SHARING AND DISPLAYING IMAGES

(30) Priorité: 14.11.2017 FR 1760667
(43) Date de publication de la demande: 23.09.2020
(73) Titulaire: Asweshare, 76230 Bois Guillaume (FR)
(72) Inventeur: LE GOFF, Alexis, 78000 Versailles (FR)
(74) Mandataire: Bouvier, Thibault
(86) Numéro de dépôt international: PCT/EP2018/081275
(87) Numéro de publication internationale: WO 2019/096871

(56) Documents cités:
- EP-A1- 1 317 144
- WO-A2-2013/178916
- JP-A- 2003 060 672
- JP-A- 2012 209 810
- US-A1- 2007 124 782
- US-A1- 2008 122 734
- US-A1- 2008 158 336
- US-A1- 2009 292 822
- US-A1- 2010 013 918
- US-A1- 2010 123 732
- US-A1- 2011 231 903
- US-B2- 8 082 464
- ANONYMOUS: "Réseau privé virtuel - Wikipédia", 13 November 2017 (2017-11-13), XP055464674, Retrieved from the Internet <URL:https://fr.wikipedia.org/w/index.php?title=Réseau_privé_virtuel&oldid=142565641> [retrieved on 20180404]

## Description

### Domaine technique

L'invention se rapporte au domaine du partage d'images via un réseau de communication numérique, notamment à des serveurs de partage d'image, des dispositifs d'affichage d'image et des procédés de partage d'image et d'affichage d'image.

### Arrière-plan technologique

Le document WO02/09415 enseigne un procédé d'affichage de photos sur des cadres photos connectés dans des réseaux de communication tels que l'Internet ou un réseau cellulaire.

Les cadres photos connectés effectuent leurs mises à jour en interrogeant à intervalles régulier un serveur de partage de photos pour vérifier la présence de nouvelles photos. Aussi, la consommation de données est grande entre le cadre photo connecté et le serveur de partage de photos à cause des requêtes périodiques. De plus, la consommation de données ne pourrait être réduite qu'au prix d'une durée de latence longue entre la réception d'une nouvelle photo par le serveur de partage de photos et l'affichage de la nouvelle photo par le cadre photo connecté, notamment due à l'intervalle entre deux requêtes de mise à jour.

Le document US20100013918 enseigne un procédé d'échange d'images entre un serveur statique, des caméras et un téléphone. La bidirectionnalité des communications est assurée par le serveur central qui possède une adresse IP publique statique.

Les caméras sont connectées grâce à une connexion « keepalive » permanente pour avoir une bidirectionnalité des communications. Ce type de connexion entraîne l'obligation de communications pour maintenir le lien ouvert en dehors de la transmission d'images et est donc trop coûteuse pour des échanges M2M (Machine to Machine) dans un cadre privé et de loisirs. En effet, le principe du « keepalive » repose sur le fait que le serveur vérifie régulièrement l'état des connexions TCP/IP.

Le document JP2012209810 concerne un système de surveillance par caméras immobiles sur un dispositif d'affichage qui est un PC, pour prévenir les vols et sécuriser les magasins et les supermarchés. Ce système est exempt de cartes SIM.

Le document US2010013918 prévoit des caméras qui sont également immobiles et équipées d'antennes pour communiquer sur un réseau GRPS. Les coûts d'exploitation d'un tel système sont très élevés, voire prohibitifs.

Le document US8082464 concerne un système distribué qui comprend des composants logiciels s'exécutant sur différents ordinateurs et interagissant les uns avec les autres via un réseau, souvent dans le cadre d'une application distribuée plus vaste.

Le document US2009292822 divulgue un cadre photo connecté, mais qui ne prévoit ni module de communication cellulaire, ni carte SIM.

### Résumé

L'invention permet de satisfaire le besoin de pouvoir envoyer des photos instantanément et à moindre coût à des cadres photos connectés à réseau de communication numérique.

Ces envois de photos effectuées dans un cadre privé et de loisirs par des protocoles de Machine à Machine doivent pouvoir être effectués sans coût important dus aux échanges de données et doivent utiliser des réseaux qui permettent de garantir la confidentialité.

Pour répondre à l'exigence de confidentialité, l'invention permet 'adresse les dispositifs d'affichage par un réseau privé virtuel de couche IP.

Dans l'invention, les objets connectés sont des systèmes fermés adressables par le réseau mais pas de l'extérieur du réseau, cela permet d'alléger les données car il n'y a pas nécessité de les crypter et donc la puissance de calcul de l'objet connecté peut être moindre.

L'utilisation de ce type de protocoles n'implique pas la nécessité de sécurisation du côté de l'objet connecté, donc pas la nécessité de chiffrer et permet de ne pas alourdir les données échangées. Cela permet en outre d'utiliser des objets connectés qui ne sont pas nécessairement dotés de puissance de calcul.

Pour maintenir des coûts compatibles avec une activité de loisir l'invention utilisedes systèmes de communication qui ne s'ouvrent qu'au moment de la communication comme des cartes SIM, de l'anglais « Subscriber Identity Module » (de type machine à machine, également appelé en anglais « Machine to Machine » (M2M) dont la mémoire comporte un numéro d'abonné IMSI (International Mobile Subscriber Identity) associé à une adresse IP statique du dispositif d'affichage.

Des eSIM (embedded SIM) qui sont des puces reprogrammables embarquées dans l'équipement (objets connectés) au même titre que les autres composants électroniques sont également utilisables. L'eSIM facilite la mise en service de l'équipement et la mise à jour des données à distance en quelques clics.

L'invention permet d'établir les communications entre un serveur de partage d'image, un serveur de stockage d'image et une flotte de dispositifs d'affichage sur un réseau privé virtuel.

Selon un premier de ses objets, l'invention concerne un cadre photo connecté (8) comportant :
- un module de communication cellulaire (17) qui permet la communication dudit cadre photo connecté (8) dans un réseau privé virtuel (12) supporté par un réseau cellulaire (19) par lequel le cadre photo (8) est connecté ; et comprenant une carte SIM (18),
- une mémoire non volatile dans la carte SIM (18) dans le module de communication cellulaire (17) stockant un identifiant IMSI correspondant à une adresse IP statique configurée pour appartenir audit réseau privé virtuel (12), pour permettre l'adressage du cadre photo connecté (8), l'adresse IP statique étant associée par le réseau d'accès radio cellulaire audit identifiant IMSI,
- un module de stockage d'image (9) configuré pour stocker des images,
- un écran (14) configuré pour afficher les images stockées dans le module de stockage d'image,
- un module de chargement d'image (10) configuré pour :
   - recevoir depuis un serveur de partage d'image (1), à travers le réseau privé virtuel (12), un message d'information (103) comportant une adresse de stockage d'une nouvelle image dans un serveur de stockage d'image (13) dudit réseau privé virtuel (12), le module de communication cellulaire (17) étant configuré pour communiquer avec le serveur de partage d'image (1) par l'intermédiaire dudit réseau cellulaire (19),
   - émettre une requête de chargement (104) en direction du serveur de stockage d'image (13) à travers le réseau privé virtuel (12), en réponse à la réception du message d'information (103), la requête de chargement (104) comportant l'adresse de la nouvelle image,
   - recevoir la nouvelle image, depuis le serveur de stockage d'image (13) à travers le réseau privé virtuel (12),
   - stocker la nouvelle image dans le module de stockage d'image (9).

On peut prévoir que la carte SIM (18) est de type SIM M2M.

On peut prévoir que le module de chargement d'image est configuré pour, en réponse à la réception de la nouvelle image, afficher immédiatement à l'écran (14) la nouvelle image.

On peut prévoir en outre une interface de réponse configurée pour, en réponse à une action d'un utilisateur destinataire sur le cadre photo connecté (8), envoyer un message de réponse (108) au serveur de partage d'image (1), le message de réponse (108) comportant un identifiant d'une image à laquelle la réponse est associée ou un identifiant d'abonné expéditeur d'une image à laquelle la réponse est associée.

Selon un autre de ses objets, l'invention concerne un procédé de partage d'image comportant :
- recevoir, d'un smartphone (7), une requête d'affichage d'image (100) comportant une adresse d'affichage et une image,
- déterminer que l'adresse d'affichage est associée à un cadre photo connecté (8) selon l'une quelconque des revendications précédentes, disposant d'une adresse IP statique privée,
- transmettre à un serveur de stockage d'image (13), une requête de stockage (101) comportant l'image,
- recevoir depuis le serveur de stockage d'image un message de réception (102), le message de réception (102) comportant une adresse de stockage de l'image dans le serveur de stockage d'image, et
- à travers un réseau cellulaire (19) supportant un réseau privé virtuel (12), transmettre, à une adresse IP statique associée au cadre photo connecté (8), un message d'information (103) comportant l'adresse de stockage de l'image, le réseau cellulaire (19) comportant au moins un réseau d'accès radio cellulaire par lequel le cadre photo (8) est connecté,
- recevoir à une adresse IP statique configurée pour appartenir à un réseau privé virtuel (12), depuis un serveur de partage d'image (1), à travers le réseau privé virtuel (12), un message d'information (103) comportant une adresse de stockage d'une nouvelle image dans le serveur de stockage d'image (13), l'adresse IP statique étant associée par le réseau d'accès radio cellulaire à un identifiant IMSI correspondant, stocké dans une mémoire non volatile d'une carte SIM (18) d'un module de communication cellulaire (17) du cadre photo connecté (8),
- émettre une requête de chargement (104) en direction du serveur de stockage d'image (13) à travers le réseau privé virtuel (12), en réponse à la réception du message d'information (103), la requête de chargement (104) comportant l'adresse de la nouvelle image,
- recevoir la nouvelle image, depuis le serveur de stockage d'image (13) à travers le réseau privé virtuel (12), et
- stocker la nouvelle image dans un module de stockage d'image (9) et/ou afficher la nouvelle image sur un écran (14) ;
le procédé comprenant optionnellement en outre une étape consistant à sélectionner plusieurs adresses d'affichage dans un carnet d'adresse.

L'invention concerne enfin un système de partage d'image, susceptible de mettre en œuvre le procédé selon l'invention, comprenant :
- Un ensemble d'au moins un cadre photo connecté (8) l'invention, connecté à un réseau virtuel privé (12) ;
- Un serveur de partage d'image (1) comportant :
   o une interface récepteur (2) configurée pour recevoir dudit ensemble d'au moins un smartphone (7) une requête d'affichage d'image (100) sur un ensemble d'au moins un cadre photo connecté (8) disposant d'une adresse IP statique privée (8), la requête d'affichage d'image comportant une ou plusieurs adresses d'affichage et une image,
   o un module de stockage de données (3) stockant un répertoire de cadres photo connectés (8), ledit répertoire comportant des adresses IP statiques dans le réseau privé virtuel (12), lesdites adresses IP statiques étant respectivement associées à une pluralité de cadres photo connectés (8),
   o un module de mise à disposition d'images (4), fermé, adressable et configuré pour, en réponse à la réception de la requête d'affichage d'image:
      - déterminer que l'adresse d'affichage correspond à une adresse IP statique présente dans le répertoire des cadres photo connectés (8) et associée à un ensemble d'au moins un cadre photo connecté (8),
      - transmettre à un serveur de stockage d'image (13), une requête de stockage (101) comportant l'image,
      - recevoir depuis le serveur de stockage d'image un message de réception (102), le message de réception (102) comportant une adresse de stockage de l'image dans le serveur de stockage d'image, et
      - à travers le réseau privé virtuel (12), transmettre, à l'adresse IP statique associée à l'ensemble d'au moins un cadre photo connecté (8), un message d'information (103) comportant l'adresse de stockage de l'image.

On peut prévoir que le message d'information (103) est transmis en réponse à la réception dudit message de réception (102).

On peut prévoir que le répertoire de cadres photo connectés (8) comporte des associations entre les adresses d'affichage et les adresses IP statiques.

On peut prévoir que le répertoire de cadres photo connectés (8) comporte un enregistrement pour chacun des cadres photo connectés (8), ledit enregistrement comportant un identifiant de cadre photo connecté (8) et une adresse IP statique associée au cadre photo connecté (8), et dans lequel l'identifiant de cadre photo connecté (8) est associé par un encodage à une adresse d'affichage, le serveur de partage d'image comportant un module de décodage configuré pour décoder l'adresse d'affichage reçue dans la requête d'affichage d'image pour retrouver un identifiant de cadre photo connecté (8) dans le répertoire de cadres photo connectés (8).

Grâce à un tel encodage, la connaissance d'une adresse d'affichage ne permet pas de déduire facilement les adresses d'affichage d'autres dispositifs d'affichage.

Dans un mode de réalisation, l'identifiant de dispositif d'affichage est un numéro de série du dispositif d'affichage, par exemple un numéro IMEI d'une puce GSM/UMTS.

Dans un mode de réalisation, l'adresse de stockage de l'image est une URL, de l'anglais « uniform ressource locator ».

Dans un mode de réalisation, le serveur de partage d'image comporte en outre un module de traitement d'image configuré pour traiter l'image reçue dans la requête d'affichage d'image de sorte à générer une image retraitée, l'image envoyée par le serveur de partage d'image au serveur de stockage d'image étant l'image retraitée.

Un tel module de traitement d'image peut appliquer divers traitements. Dans un mode de réalisation, le répertoire de dispositifs d'affichage comporte en outre des paramètres de dimension d'écran du dispositif d'affichage, et le module de traitement d'image est configuré pour appliquer à l'image un traitement de redimensionnement en fonction des paramètres de dimension d'écran.

Le serveur de stockage d'image et le serveur de partage d'image peuvent être mis en œuvre sur une même plateforme ou sur des plateformes différentes. Dans ce dernier cas, ils communiquent ensemble par le réseau privé virtuel et présentent chacun une adresse IP statique.

Dans un mode de réalisation, le serveur de partage d'image comporte en outre un répertoire d'abonné stocké dans le module de stockage de données et un module de gestion de réponses (16) configuré pour :
- recevoir un message de réponse, le message de réponse comportant un identifiant d'image ou un identifiant d'abonné expéditeur,
- déterminer à l'aide du répertorie d'abonné que l'identifiant d'image ou l'identifiant d'abonné expéditeur est associé à des informations de contact d'un abonné expéditeur,
- effectuer une action d'information de réponse en fonction des informations de contact de l'abonné expéditeur.

Les informations de contact peuvent comporter une adresse du dispositif source dans un réseau de communication et/ou une adresse de courrier électronique et/ou un numéro de téléphone et/ou un autre identifiant de l'abonné expéditeur. De nombreuses actions d'information de réponse différentes peuvent être mises en œuvre. Par exemple, l'action d'information de réponse est la transmission, par le serveur de partage d'image, d'une notification PUSH sur le dispositif source. Par exemple, l'action d'information de réponse est l'envoi d'un message électronique sur l'adresse de courrier électronique.

Dans un tel répertoire d'abonnés, le compte d'abonné d'un abonné expéditeur, peut comporter des associations entre les informations de contact de l'abonné expéditeur et une ou plusieurs adresses d'affichage auxquelles l'abonné expéditeur souhaite pouvoir envoyer facilement des requêtes d'affichage. Optionnellement, le compte d'abonné peut comporter en outre une association entre une adresse d'affichage et un nom personnalisé du dispositif d'affichage. Par exemple, le nom personnalisé du dispositif d'affichage est un nom ou un surnom que l'abonné expéditeur attribue à l'utilisateur destinataire qui utilise le dispositif d'affichage cible.

Dans un mode de réalisation, l'adresse d'affichage est une première adresse d'affichage et l'adresse IP statique est une première adresse IP statique, le dispositif d'affichage cible est un premier dispositif d'affichage cible, la requête d'affichage d'image comportant en outre une deuxième adresse d'affichage, le module de mise à disposition d'images étant en outre configuré pour, en réponse à la réception du message de transmission,
- déterminer que la deuxième adresse d'affichage correspond à une deuxième adresse IP statique présente dans le répertoire des dispositifs d'affichage et associée à un deuxième dispositif d'affichage cible,
- à travers le réseau privé virtuel, transmettre, à l'adresse associée au deuxième dispositif d'affichage cible, le message d'information comportant l'adresse de stockage de l'image.

Le dispositif source comporte de préférence une interface utilisateur comportant des fonctionnalités de création de la requête d'affichage. Cette interface utilisateur peut être implantée de différentes manières. Selon un mode de réalisation, le serveur de stockage d'image peut comporter un serveur HTTP pour générer une page web fournissant un formulaire de création de la requête d'affichage.

Un tel dispositif d'affichage peut comporter une ou plusieurs des caractéristiques suivantes.

Le dispositif d'affichage peut être mis en œuvre d'une grande variété de manières, notamment par un téléphone mobile, par un ordinateur, une tablette numérique, etc. Dans un mode de réalisation préféré, le dispositif d'affichage est un cadre photo numérique connecté, dont les fonctionnalités peuvent être en nombre très limité en vue de garantir une grande facilité d'utilisation.

Grâce à l'utilisation d'une carte SIM, le dispositif d'affichage d'image peut recevoir et afficher des images via le réseau cellulaire. Ainsi, le dispositif d'affichage d'image peut recevoir et afficher des images même s'il n'est pas en connexion ouverte permanente avec le serveur de partage d'image.

Le réseau privé virtuel peut être mis en œuvre de nombreuses manières. Dans un mode de réalisation, le réseau privé virtuel est mis en œuvre par une technologie de couche IP, par exemple IPsec. Par ailleurs le réseau privé virtuel peut être supporté par n'importe quel réseau physique, par exemple un réseau physique qui peut comporter une mise en œuvre filaire ou non filaire. De préférence, le cadre comporte une interface de réseau cellulaire et le réseau privé virtuel est mis en œuvre au moins en partie sur un réseau d'accès cellulaire. Toute technologie de réseau cellulaire peut être employée, notamment les technologies GSM, GPRS, EDGE, UMTS, HSDPA, HSUPA, HSPA+, 3G, 4G ou LTE.

Les images peuvent être tout type d'image de tout type de format. Par exemple, les images sont des photographies numériques. Par exemple, le format des images est sélectionné dans la liste consistant en : Joint Photographic Experts Group (JPEG), Portable Network Graphics (PNG), Graphics Interchange Format (GIF), Windows bitmap (BMP), Tag Image File Format (TIFF), Portable Document Format (PDF).

### Brève description des figures

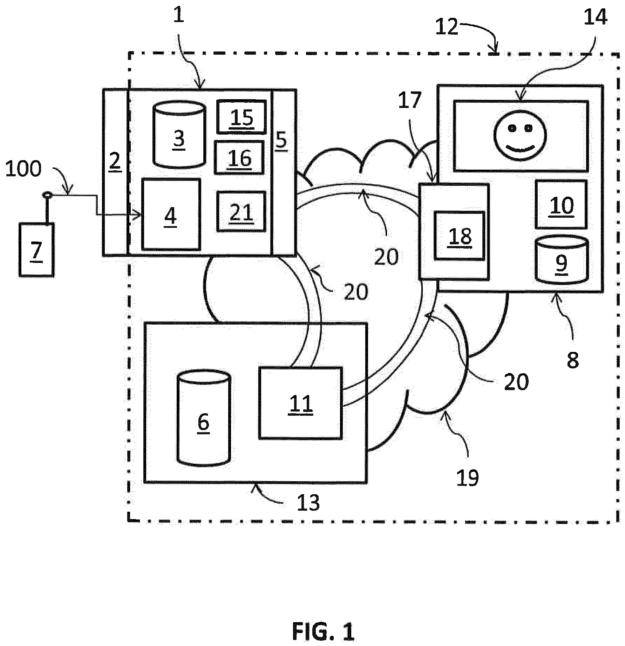

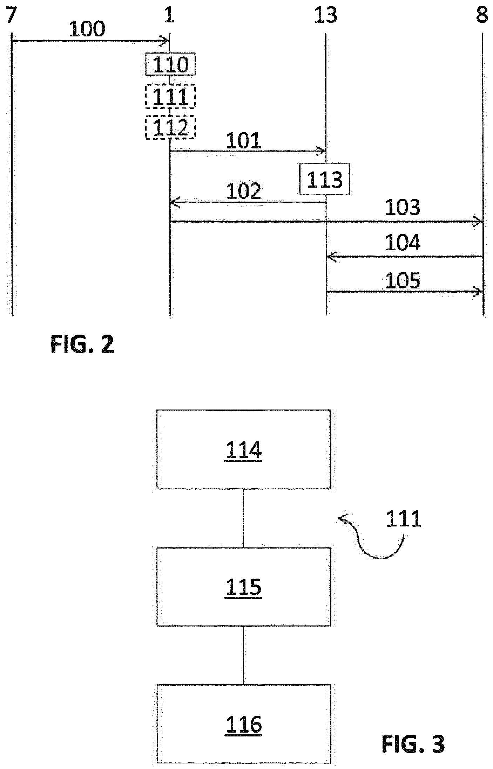

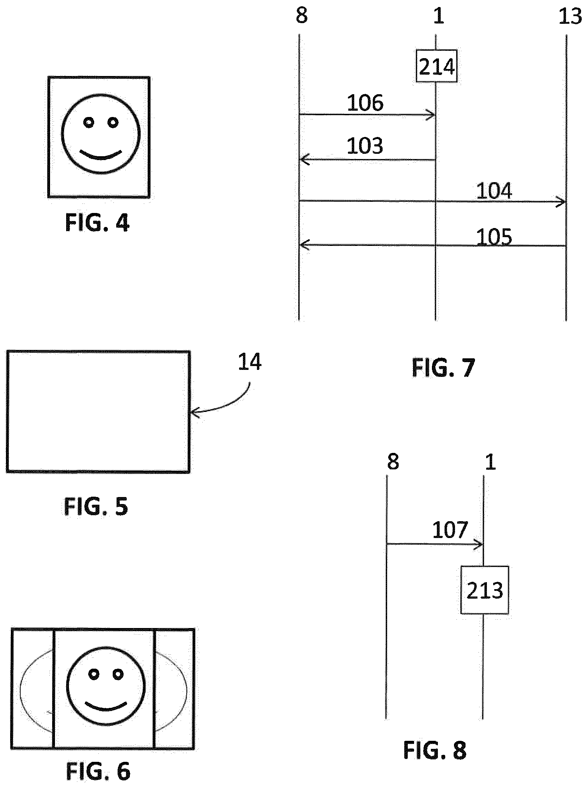

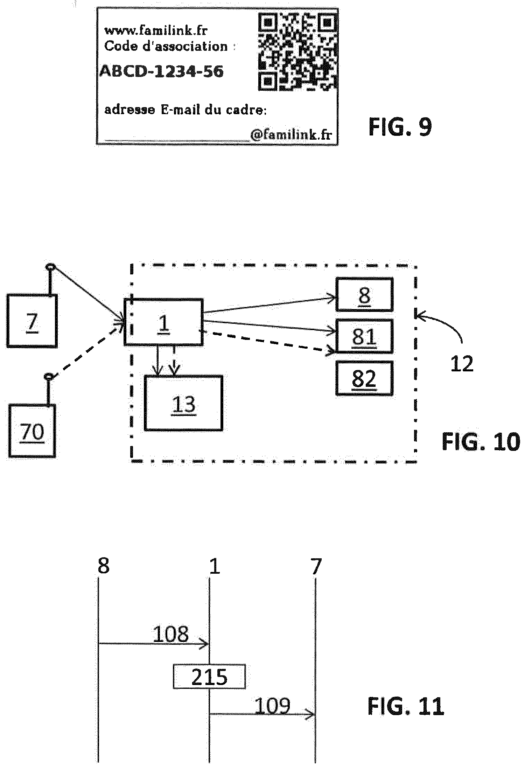

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est un schéma fonctionnel d'un système de partage d'image comportant un serveur de partage d'image, un serveur de stockage d'image et un dispositif d'affichage d'image connectés par un réseau privé virtuel.
- **La** **figure 2** est un diagramme d'appel qui peut être mis en œuvre dans le système de partage d'image de la figure 1 pour afficher une nouvelle image sur le dispositif d'affichage.
- **La** **figure 3** est un schéma fonctionnel d'un procédé qui peut être mis en œuvre par le serveur de partage d'image pour retrouver une adresse du dispositif d'affichage.
- **La** **figure** 4 est une représentation schématique d'une image pouvant être partagée dans le système de partage d'image de la figure 1.
- **La** **figure 5** est une représentation schématique de l'écran d'un cadre photo connecté pouvant être utilisé dans le système de partage d'image de la figure 1.
- **La** **figure 6** est une représentation schématique de l'image de la figure 4 retraitée et affichée sur l'écran de la figure 5.
- **La** **figure 7** est un diagramme d'appel qui peut être mis en oeuvre dans le système de partage d'image de la figure 1 lors de l'activation du cadre photo connecté.
- **La** **figure 8** est un diagramme d'appel qui peut être mis en oeuvre dans le système de partage d'image de la figure 1 lors de l'enregistrement du cadre photo connecté au service du serveur de partage d'image.
- **La** **figure 9** est un exemple de document fourni avec le cadre connecté mentionnant son adresse d'affichage afin que des abonnés émetteurs puissent afficher des photos sur le cadre connecté.
- **La** **figure 10** est une représentation symbolique d'un système de partage d'image semblable à celui de la figure 1, comportant une pluralité de dispositifs sources et une pluralité de dispositifs d'affichage connectés.
- **La** **figure 11** est un diagramme d'appel qui peut être mis en oeuvre dans le système de partage d'image de la figure 1 lors de la transmission d'une réponse, par le dispositif d'affichage connecté, à un dispositif source.

### Description détaillée de modes de réalisation

Il est décrit ci-dessous des procédés et systèmes permettant l'affichage d'une image qu'un abonné expéditeur souhaite afficher sur un dispositif d'affichage, qui sera nommé ci-dessous « cadre photo connecté », appartenant à un utilisateur destinataire. Ces procédés et systèmes sont particulièrement avantageux en ce qu'ils permettent une ergonomie et une simplicité maximale du cadre photo connecté, ce qui permet de le destiner à tout utilisateur destinataire, y compris à des personnes âgées, des jeunes enfants ou des personnes déficientes mentales. Ces moyens d'affichage permettent ainsi de favoriser le lien social, par exemple le lien intergénérationnel.

Un système de partage d'image est décrit en référence, mais non limitativement, à l'exemple représenté sur la **figure 1****.**

Le système de partage d'image de la figure 1 comporte un dispositif source 7 et un cadre photo connecté 8. Le dispositif source 7 permet l'envoi, par un abonné expéditeur, d'une nouvelle image à afficher sur le cadre photo connecté 8. Le système de partage d'image de la figure 1 comporte également un serveur de partage d'image 1, un serveur de stockage d'image 13 et un réseau de communication numérique 19 supportant un réseau privé virtuel 12. Le réseau de communication numérique 19 comporte au moins un réseau d'accès radio cellulaire. Le réseau de communication numérique 19 est par exemple un réseau d'un opérateur de télécommunication.

Sur la figure 1, on a représenté symboliquement que le serveur de partage d'image 1, le serveur de stockage d'image 13 et le cadre photo connecté 8 appartiennent à un même réseau privé virtuel 12, ce qui signifie que leur communication transite par des tunnels 20. Les tunnels 20 sont des canaux de communication de machine à machine cryptés afin d'assurer la confidentialité et la sécurité des communications entre les éléments du réseau privé virtuel 12. Par exemple, ce cryptage est réalisé par l'utilisation de clefs publiques et privées.

De préférence, le réseau privé virtuel 12 est implémenté par des adresses IP statiques et toutes les communications dans le réseau privé virtuel 12 sont mises en œuvre sur une pile protocolaire TCP/IP ou HTTP/TCP/IP. Une adresse IP statique est une adresse IP unique et fixe dans le temps et dans l'espace. Notamment, le serveur de partage d'image 1 ainsi que le serveur de stockage d'image 13 disposent chacun d'une adresse IP statique privée, et le cadre photo connecté 8 dispose également d'une adresse IP statique privée. Ainsi, avantageusement l'adresse IP du cadre photo connecté 8 reste la même quel que soit l'emplacement du cadre photo connecté 8 dans le monde à tout moment, et notamment quel que soit l'opérateur téléphonique gérant le réseau d'accès radio cellulaire par lequel le cadre est connecté. Préférentiellement, l'adresse IP statique privée est associée de manière unique à une carte SIM M2M. Lors de la procédure de connexion du dispositif d'affichage au réseau d'accès radio cellulaire, le réseau d'accès radio cellulaire est configuré pour attribuer l'adresse IP statique privée en fonction du numéro d'abonné IMSI contenu dans la mémoire d'une carte SIM M2M.

Les tunnels utilisent une technologie de cryptographie avec un système de clefs publiques et de clefs privées. Par exemple, la technologie utilisée est de type SSL et IPsec. Le réseau privé virtuel 12, à savoir les tunnels 20 cryptés, permet de relier les éléments de réseau comme s'ils appartenaient à un unique réseau dédié.

Afin d'afficher une nouvelle image, par exemple une photo numérique, sur le cadre photo connecté 8, un dispositif source 7 envoie une requête d'affichage d'image 100 au serveur de partage d'image 1.

La requête d'affichage d'image 100 est reçue par l'intermédiaire d'une interface récepteur 2 du serveur de partage d'image 1.

Le serveur de partage d'image 1 comporte plusieurs modules de traitement de données afin de permettre l'affichage de la nouvelle image sur le cadre photo connecté 8.

Le serveur de partage d'image 1 comporte notamment un module de mise à disposition d'images 4 apte à transmettre à un dispositif d'affichage cible un message d'information 103 comportant une adresse de stockage de l'image.

Le serveur de partage d'image 1 comporte également un module de stockage de données 3 dans lequel est stocké un répertoire de dispositifs d'affichage. Le répertoire de dispositifs d'affichages contient une table d'enregistrement dans laquelle sont enregistrés par exemple des adresses IP statiques de cadres photo connectés et des codes IMEI.

Pour les abonnés expéditeurs, chaque cadre photo connecté est connu par son adresse d'affichage. Les adresses d'affichage sont communiquées aux abonnés expéditeurs. Le répertoire de dispositifs d'affichages comporte des moyens pour associer l'adresse d'affichage du cadre photo connecté à l'adresse IP statique du cadre photo connecté.

Un exemple de répertoire de dispositifs d'affichage est représenté par le tableau 1 ci-dessous :

**Tableau 1 - Exemple de répertoire de dispositif d'affichage**

| Adresse d'affichage | Code IMEI | adresse IP statique |
|---|---|---|
| ABCD-1234-56 | 351557010202731 | 10.255.255.254 |
| EFGH-7891-23 | 351557010202732 | 10.255.255.253 |
| ZWYP-5468-87 | 351557010202733 | 10.255.255.252 |

Dans un mode de réalisation, l'adresse d'affichage est un encodage du code IMEI par une fonction d'encodage réversible prédéfinie. Dans ce cas, la colonne « adresse d'affichage » n'est pas nécessaire dans le répertoire de dispositifs d'affichage.

Par exemple, le cadre photo connecté dont l'adresse d'affichage est ABCD-1234-56 est le cadre photo connecté 8 représenté dans le réseau de communication de la figure 1.

Le serveur de partage d'image 1 comporte également un module de gestion de compte d'abonnés expéditeurs 15, un module de traitement d'image 21 et un module de gestion de réponses 16 dont les fonctionnalités seront décrite ultérieurement.

Le serveur de partage d'image 1 communique avec le cadre photo connecté 8 et avec le serveur de stockage d'image 13 sur le réseau privé virtuel 12 par l'intermédiaire d'une interface de communication IP 5.

Le serveur de stockage d'image 13 comporte un module de stockage d'images 6 dans lequel sont stockées des images à des adresses définies. Par exemple ces adresses sont des URL. Un module de traitement de stockage 11 du serveur de stockage d'image 13 communique par un tunnel 20 avec le serveur de partage d'image 1 afin de stocker une image transmise par le serveur de partage d'image 1. Ce tunnel n'est pas nécessaire si les deux serveurs 1 et 13 sont réunis en une seule plateforme. Le module de traitement de stockage 11 peut également transmettre une image stockée dans le module de stockage d'images 6 au cadre photo connecté 8.

Le cadre photo connecté 8 est adressable par son adresse IP statique, qui est associée par le réseau d'accès radio cellulaire au numéro d'abonné IMSI contenu dans la mémoire non-volatile d'une carte SIM 18 présente dans un module de communication cellulaire 17.

Le cadre photo connecté 8 comporte un module de communication cellulaire 17 qui permet la communication du cadre photo connecté 8 dans le réseau privé virtuel 12 via un réseau d'accès radio cellulaire.

Le cadre photo connecté 8 est équipé d'un module de chargement d'image 10 pour télécharger une image, d'un module de stockage d'image 9 pour stocker l'image et d'un écran 14 pour afficher les images stockées dans le module de stockage d'image 9.

A présent, un diagramme d'appel pouvant être mis en œuvre dans le système de partage d'image de la figure 1 pour afficher une nouvelle image sur le cadre photo connecté 8 va être décrit en référence à la figure 2.

Le dispositif source 7 envoie une requête d'affichage d'image 100 au serveur de partage d'image 1.

La requête d'affichage d'image 100 peut être envoyée à destination du serveur de partage d'images 1 suivant différents protocoles, par exemple par un protocole HTTPS ou SMTP.

La requête d'affichage d'image 100 comporte l'adresse d'affichage du cadre photo connecté 8, par exemple ABCD-1234-56, et une nouvelle image destinée à être transmise et affichée, par exemple l'image représentée sur la figure 4.

Le serveur de partage d'image 1 reçoit la requête d'affichage d'image 100 et la traite dans son module de mise à disposition d'image 4 par une étape de traitement de requête d'affichage 110 dans laquelle l'adresse IP statique associée au cadre photo connecté 8 dans le répertoire de dispositifs d'affichage d'image est retrouvée à partir de l'adresse d'affichage, par exemple ABCD-1234-56.

Optionnellement, une deuxième étape de traitement de requête d'affichage 111 et une troisième étape de traitement de requête d'affichage 112 qui seront décrites ultérieurement peuvent être effectuées.

Ensuite, le serveur de partage d'image 1 envoie au serveur de stockage d'image 13, une requête de stockage 101 comportant la nouvelle image.

A l'étape 113, le serveur de stockage d'image 13 stocke la nouvelle image sur réception de la requête 101.

Le serveur de stockage d'image 13 envoie ensuite un message de réception 102 comportant une adresse de stockage de la nouvelle image dans le serveur de stockage d'image 13 au serveur de partage d'image 1. L'adresse de stockage de la nouvelle image est générée par le serveur de stockage d'image 13.

Le serveur de partage d'image 1 transmet alors, par un tunnel 20, un message d'information 103 à l'adresse IP statique du cadre photo connecté 8 préalablement retrouvée dans le répertoire de dispositifs d'affichage.

Le message d'information 103 comporte l'adresse de stockage de la nouvelle image, préférentiellement une URL. Le message d'information 103 peut en outre comporter des informations contextuelles telles qu'une légende associée à la nouvelle image, une date et un identifiant de l'abonné expéditeur envoyant la nouvelle image à partir du dispositif source 7. L'abonné expéditeur peut réaliser cet envoi via un compte d'abonné qui sera décrit plus bas.

A réception du message d'information 103, le cadre photo connecté 8 télécharge la nouvelle image, comme représenté par le chiffre de référence 105, en envoyant une requête 104 de téléchargement adressée à l'adresse de stockage de la nouvelle image.

Dès que la nouvelle image est téléchargée, elle est stockée sur le cadre photo connecté 8.

Différentes opérations peuvent être prévues dans le cadre photo connecté 8 après que la nouvelle image ait été reçue. De préférence, la nouvelle image est immédiatement affichée à l'écran 14. D'autres opérations peuvent être prévues. Par exemple, ces opérations peuvent comprendre l'affichage d'un diaporama des images stockées dans le cadre photo connecté 8, ou l'affichage d'une mosaïque d'au moins une partie des images stockées.

Comme illustré précédemment, le répertoire de dispositifs d'affichage comporte un enregistrement comportant un identifiant de cadre photo connecté et l'adresse IP statique associée au cadre photo connecté. Dans une réalisation préférée du serveur de partage d'image 1, l'identifiant du cadre photo connecté est un encodage de l'adresse d'affichage. Par exemple, la fonction d'encodage utilisée peut être une fonction mathématique bijective.

Dans ce cas, le serveur de partage d'image 1 peut retrouver l'adresse IP statique à partir de l'adresse d'affichage reçue en exécutant la deuxième étape de traitement de requête d'affichage 111 qui est représentée en sous-étapes à la figure 3.

Le serveur de partage d'image 1 comporte un module de décodage configuré pour mettre en œuvre ces sous-étapes. La fonction de décodage correspondant à la fonction d'encodage est enregistrée dans le module de décodage. Dans le cas où la fonction d'encodage est une fonction bijective, alors la fonction de décodage est l'inverse de la fonction d'encodage.
- Dans la sous-étape 114, le module de décodage reçoit l'adresse d'affichage portée par la requête 100.
- Dans la sous-étape 115, le module de décodage applique la fonction de décodage à l'adresse d'affichage afin de retrouver l'identifiant du cadre photo connecté,
- Dans la sous-étape 116, le module de décodage détermine l'adresse IP statique à partir de l'identifiant du cadre photo connecté

Dans un exemple, l'identifiant du dispositif d'affichage est un code IMEI, comme représenté sur le tableau 1.

Les codes IMEI peuvent être des numéros de série de puces GSM de communication de dispositif d'affichage qui se succèdent séquentiellement, par exemple dans le cas où les puces GSM de communication de dispositif d'affichage sont commandés en série pour la fabrication des dispositifs d'affichage en usine. Aussi, une personne mal intentionnée disposant d'un code IMEI d'un dispositif d'affichage pourrait deviner les codes IMEI d'autres dispositifs d'affichage enregistrés sur le serveur de partage d'image 1.

Quand on utilise la fonction d'encodage, on ne donne à l'utilisateur que l'adresse d'affichage qui peut être communiquée sur toute forme de support, physique ou numérique. Grace à la fonction d'encodage, les adresses d'affichages correspondant aux codes IMEI successifs ne se succèdent pas séquentiellement, comme représenté sur le tableau 1. Ainsi, on écarte le risque qu'une personne mal intentionnée ne puisse deviner l'adresse d'affichage d'un autre dispositif d'affichage.

Dans un exemple, pour la fabrication en usine des cadres photos connectés ou autres dispositifs d'affichage, une imprimante est directement programmée avec une fonction d'encodage afin d'imprimer l'adresse d'affichage sur le manuel utilisateur d'un dispositif d'affichage. Un exemple de cette impression est représenté sur la **figure 9****.** L'adresse d'affichage représentée est la chaine de caractères ABCD-1234-56. Les termes en français « code d'association» au-dessus de l'adresse d'affichage permettent à un lecteur d'identifier que la chaine de caractères ABCD-1234-56 est une adresse d'affichage. Avantageusement pour améliorer l'ergonomie, en particulier à destination des personnes âgées, l'adresse d'affichage est une chaîne de caractère ne présentant pas de caractères ambigus : pas de 0, O, L, 1. L'adresse d'affichage peut également être contenue dans un QR code ou un code barre.

Dans un mode de réalisation perfectionné, le serveur de partage d'image 1 comporte également un module de traitement d'image 21 et la troisième étape de traitement de requête d'affichage 112, qui est une étape de traitement d'image, est mise en œuvre.

Le module de traitement d'image 21 comporte des fonctionnalités de traitement d'image afin de générer une image retraitée à partir d'une image envoyée par un dispositif source 7. L'image envoyée au serveur de stockage d'image 13 suite à ce traitement d'image est l'image retraitée.

Le traitement d'image peut comprendre des fonctionnalités de redimensionnement, de filtre, de compression etc. Notamment, le module de traitement d'image 21 offre une fonctionnalité de redimensionnement automatique de l'image à la forme de l'écran 14. Par exemple, cette fonctionnalité de redimensionnement automatique peut être paramétrée de sorte à ajouter des bandes floues de part et d'autre des bords d'une image dont les dimensions ne correspondent pas à l'écran du dispositif d'affichage connecté.

Les figures 4 à 6 représentent cette dernière fonctionnalité. La figure 4 représente une nouvelle image envoyée par un dispositif source 7 à destination du cadre photo connecté 8. Par exemple, la nouvelle image est une photo numérique prise au format portrait par une caméra embarquée dans le dispositif source 7, le dispositif source 7 pouvant être un smartphone. Le cadre photo connecté 8 est prévu pour être utilisé au format paysage, comme représenté sur la figure 5. Aussi, des portions de la nouvelle image sont dupliquées et floutées, puis ajoutées sous forme de bandes latérales de part et d'autre de la nouvelle image de sorte à générer une image retraitée au format de l'écran 14. Le résultat de ce traitement est représenté sur la figure 6.

Cette fonctionnalité de redimensionnement peut être mise en œuvre d'autres manières, par exemple pour ajouter des bandes floues supérieure et/ou inférieure à une nouvelle image au format panoramique à adapter au cadre photo connecté utilisé au format paysage. Cette fonctionnalité est également adaptable pour une utilisation d'un cadre photo connecté au format portrait pour redimensionner une nouvelle image au format paysage. Si l'écran 14 du cadre présente une forme carrée, cette fonctionnalité est adaptable pour ajouter des bandes floues latérales à une nouvelle image au format portrait et pour ajouter des bandes floues supérieure et/ou inférieure à une nouvelle image au format paysage.

Le cadre photo connecté 8 n'est pas toujours en service. Notamment, le cadre photo connecté 8 peut être paramétré pour se mettre en veille le soir, et se rallumer le matin, par exemple par l'utilisation d'un module d'activation connecté à une horloge. Le cadre photo connecté 8 peut aussi comporter un interrupteur marche/arrêt.

La **figure 7** est un diagramme d'appel illustrant le cas où le serveur de partage d'image 1 a envoyé le message d'information 103 au cadre photo connecté 8 lorsque le cadre photo connecté 8 était éteint ou en veille.

Le serveur de partage d'image 1 n'a alors pas reçu d'accusé de réception suite à son message d'information 103 via la pile TCP/IP. La couche TCP du serveur de partage d'image 1 a envoyé un nombre paramétré de tentatives RETRY espacées chacune d'une durée paramétrée puis a émis un message d'échec.

Suite à cette procédure, le serveur de partage d'image 1 a stocké en attente le message d'information 103, comme représenté par l'étape de stockage en attente 214.

Lorsque le cadre photo connecté 8 sort de sa veille ou est allumé, il envoie un message de réveil 106 pour le signaler au serveur de partage d'image 1, ce qui initie un nouvel envoi du message d'information 103 qui était en attente, puis le téléchargement de la nouvelle image comme décrit précédemment.

Pour constituer le répertoire de dispositifs d'affichage stocké dans le serveur de partage d'image 1, plusieurs procédures peuvent être utilisées, notamment lors de la première utilisation du cadre photo connecté. Une première connexion d'un cadre photo connecté 8 au serveur de partage d'image 1 est représentée sur la **figure 8****.** Lors de la première utilisation du cadre photo connecté 8, le cadre photo connecté 8 est paramétré de sorte à envoyer une requête d'enregistrement 107. Le serveur de partage d'image 1 traite le contenu de cette requête d'enregistrement 107 lors d'une étape d'enregistrement 213.

La requête d'enregistrement 107 peut comporter le code IMEI ou un autre identifiant du cadre photo connecté 8 et l'adresse IP statique associée au numéro IMSI stocké dans la carte SIM.

Les requêtes d'enregistrement 107 de chaque cadre photo connecté permettent ainsi de constituer le répertoire de dispositifs d'affichage.

Pour l'abonné expéditeur utilisant le dispositif source 7, il existe une interface utilisateur permettant de générer la requête d'affichage d'image 100. L'interface utilisateur peut être supportée par différents moyens. Par exemple, l'interface utilisateur peut être une page web supportée par le serveur de partage d'image 1. L'interface utilisateur peut également être supportée par une application dédiée installée sur le dispositif source 7.

Le navigateur du dispositif source 7 est configuré pour transférer sur le serveur de partage d'images 1 l'image sélectionnée dans une mémoire du dispositif source 7 via la requête d'affichage d'image 100.

Par exemple, l'interface utilisateur peut comporter un formulaire comportant un champ de saisie configuré pour recevoir une adresse d'affichage et un champ de saisie configuré pour recevoir un chemin d'accès à un fichier afin que l'abonné expéditeur puisse sélectionner un cadre photo connecté en entrant son adresse d'affichage et sélectionner une nouvelle image à afficher sur le cadre photo connecté.

L'interface utilisateur peut également comporter des fonctionnalités de modification de la nouvelle image avant l'envoi par l'abonné expéditeur.

Par exemple, l'interface utilisateur peut comporter un formulaire comportant un ou des champs configuré pour recevoir des instructions de modification d'une image. De telles instructions peuvent être des instructions de zoom, d'application de filtre, de recadrage d'image, etc.

L'interface utilisateur peut également comporter des fonctionnalités de gestion personnelle de compte d'abonné.

Par exemple, l'interface utilisateur peut comporter un formulaire comportant un ou des champs configuré pour recevoir des informations de compte d'abonné et un répertoire d'adresses d'affichages.

En effet, par mesure d'ergonomie, un abonné expéditeur peut créer un carnet d'adresse de cadres photo connectés associé à son compte abonné.

Pour cela, les fonctionnalités du module de gestion de compte d'abonnés expéditeurs 15 du serveur de partage d'image 1 comportent notamment la création de compte d'abonné et l'enregistrement d'adresse(s) d'affichage en association avec le compte d'abonné dans un répertoire de compte d'abonnés expéditeurs.

Un exemple de répertoire de compte d'abonnés expéditeurs est représenté par le tableau 2 ci-dessous :

**Tableau 2 - Exemple de répertoire de comptes abonnés expéditeurs**

| Information de contact de l'abonné expéditeur | Adresse(s) d'affichage destinataire | nom personnalisé du cadre photo connecté |
|---|---|---|
| Pierre, pierre@gmail.com, 0666666666 | ABCD-1234-56 | Papa |
| | EFGH-7891-23 | Bonne-Maman |
| Paul, paul@sfr.fr, 0777777777 | EFGH-7891-23 | Maman |
| Jacques, 0677777777 | ZWYP-5468-87 | Gertrude |

Préférentiellement, un abonné expéditeur peut entrer choisir n'importe quelle chaîne de caractères en tant que nom personnalisé du cadre photo connecté. Par exemple, la chaine de caractères suivante : « Bonne-Maman », est associée à l'adresse d'affichage EFGH-7891-23 sur le compte d'abonné de Pierre, qui est le petit fils de la propriétaire du cadre photo connecté associée à l'adresse d'affichage EFGH-7891-23. La chaine de caractères suivante : « Maman » est associée à la même adresse d'affichage EFGH-7891-23, mais sur le compte d'abonné de Paul, qui est le petit-fils de la propriétaire du cadre photo connecté associée à l'adresse d'affichage EFGH-7891-23.

Le répertoire de compte d'abonnés expéditeurs peut être constitué comme décrit ci-dessous.

Un utilisateur destinataire propriétaire d'un cadre photo connecté communique des informations d'accès de son cadre photo connecté à une personne qui souhaite envoyer des photos. Par exemple, cette personne est celle qui a offert le cadre photo connecté à l'utilisateur destinataire.

Les informations d'accès d'un cadre photo connecté comportent l'adresse d'affichage du cadre photo connecté. Les informations d'accès d'un cadre photo connecté peuvent en outre comporter des adresses pour accéder à un portail web de téléchargement d'une application et/ou à une page web permettant l'accès à l'interface utilisateur décrite précédemment.

En référence à la figure 9, un exemple des informations d'accès du cadre photo connecté 8 accessibles depuis son manuel utilisateur est représenté.

Les informations d'accès comportent un QR code et une adresse URL par exemple : www.familink.fr, le QR code et l'adresse URL renvoyant vers le même portail web afin que la personne qui souhaite envoyer des photos puisse accéder à l'interface utilisateur. Avantageusement, si le dispositif source 7 dispose d'une caméra embarquée, le dispositif source 7 peut scanner le QR-code afin d'accéder au portail web.

Cette personne peut alors créer un compte d'abonné. Elle est invitée pour cela à choisir son identifiant d'abonné, par exemple « Pierre », à entrer une ou plusieurs adresse(s) d'affichage, par exemple « ABCD-1234-56 » et « EFGH-7891-23 », et à choisir un nom personnalisé pour chaque cadre photo connecté, par exemple « Papa » et « Bonne-Maman ».

Ainsi, plusieurs cadres photos connectés peuvent être associés à un même compte d'abonné, et plusieurs abonnés expéditeurs peuvent envoyer des images sur un même cadre photo connecté.

En référence à la **figure 10****,** le dispositif source 7 appartenant à Pierre et le dispositif source 70 appartenant à Paul sont représentés en communication avec le cadre photo connecté 8 dont l'adresse d'affichage est « ABCD-1234-56 » et le cadre photo connecté 81 dont l'adresse d'affichage est « EFGH-7891-23 ».

La requête d'affichage d'image 100 envoyée par le dispositif source 7 peut comporter deux adresses d'affichages pour une même image. Pour cela, l'abonné expéditeur sélectionne plusieurs adresses d'affichage dans le carnet d'adresse de son compte d'abonné, via l'interface utilisateur.

Comme représenté par les flèches en trait plein, le dispositif source 7 envoie la même photo numérique aux deux cadres photo connecté 8 et 81. Comme représenté par les flèches en trait pointillé, le dispositif source 70 adresse, lui, une image au cadre photo connecté 8.

Bien qu'il ne soit représenté que trois cadres photo connectés 8, 81 et 82 dans le réseau privé virtuel 12, une flotte de cadres photo connectés d'un nombre quelconque peut être prévue.

Bien que la communication entre le dispositif source 7 et le cadre photo connecté 8 ou autre dispositif d'affichage soit essentiellement asymétrique, le cadre photo connecté 8 ou autre dispositif d'affichage peut comporter une fonctionnalité d'envoi de réponse via un module de gestion de réponses 16 du serveur de partage d'image 1.

Les fonctionnalités du module de gestion de réponses 16 du serveur de partage d'image 1 comportent notamment la possibilité, pour l'utilisateur du cadre photo connecté, d'envoyer une réponse à l'abonné expéditeur après la réception d'une nouvelle image. Cette réponse peut être déclenchée par une action de l'utilisateur destinataire. Par exemple, cette action peut être une pression sur un bouton, par exemple par un bouton via un écran tactile. Dans un exemple, le bouton est un bouton paramétré pour, en réponse à une pression, envoyer une notification au dispositif source 7 via l'application, ou un message électronique ou courriel aux adresses de contact renseignées dans le compte abonné.

Le contenu de cette notification et/ou de ce message électronique peut être préenregistré par mesure d'ergonomie, afin de minimiser les actions à accomplir de la part de l'utilisateur destinataire.

Par exemple, ce contenu est un remerciement, une mention « j'aime », ou une demande de commande de version imprimée de la nouvelle image reçue.

Le contenu de cette notification et/ou de ce message électronique peut être également modifié par l'utilisateur destinataire, par exemple via un clavier, par exemple un clavier tactile.

La **figure 11** illustre la transmission l'un message de réponse 108 via le réseau de communication de la figure 1.

Le cadre photo connecté 8 subit une des actions de l'utilisateur décrites ci-dessus, ce qui initie l'envoi du message de réponse 108. Le message de réponse 108 comporte un identifiant de la nouvelle image reçue et/ou un identifiant de l'abonné expéditeur à l'origine de l'envoi de cette nouvelle image reçue.

Le serveur de partage d'image 1 retrouve, lors d'une étape de recherche d'adresse d'abonné 215, des informations de contact de l'abonné expéditeur à l'origine de l'envoi de cette nouvelle image reçue. Ces informations de contact sont enregistrées dans répertoire de comptes abonnés expéditeurs tel qu'illustré par le tableau 2. Ces informations de contact peuvent être retrouvées à partir de l'identifiant de la nouvelle image reçue ou de l'identifiant de l'abonné expéditeur. Par exemple, ces informations de contact peuvent comporter une adresse du dispositif source, une adresse de courrier électronique, un numéro de téléphone et un identifiant d'abonné expéditeur.

Le serveur de partage d'image 1 adresse alors cette notification et/ou de ce message électronique 109 sur le dispositif source 7 s'il dispose de son adresse dans répertoire de comptes abonnés expéditeurs.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Notamment, bien que l'invention ait été décrite en liaison avec des images fixes, le serveur de partage d'image, le serveur de stockage d'image et le cadre photo connecté pourraient aussi être utilisées pour partager des vidéos.

Certains des éléments représentés, notamment les serveurs de partage et de stockage d'image et les différents modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Cadre photo connecté (8) comportant :
- un module de communication cellulaire (17) qui permet la communication dudit cadre photo connecté (8) dans un réseau privé virtuel (12) supporté par un réseau cellulaire (19) par lequel le cadre photo (8) est connecté ; et comprenant une carte SIM (18),
- une mémoire non volatile dans la carte SIM (18) dans le module de communication cellulaire (17) stockant un identifiant IMSI correspondant à une adresse IP statique configurée pour appartenir audit réseau privé virtuel (12), pour permettre l'adressage du cadre photo connecté (8), l'adresse IP statique étant associée par le réseau d'accès radio cellulaire audit identifiant IMSI,
- un module de stockage d'image (9) configuré pour stocker des images,
- un écran (14) configuré pour afficher les images stockées dans le module de stockage d'image,
- un module de chargement d'image (10) configuré pour :
- recevoir depuis un serveur de partage d'image (1), à travers le réseau privé virtuel (12), un message d'information (103) comportant une adresse de stockage d'une nouvelle image dans un serveur de stockage d'image (13) dudit réseau privé virtuel (12), le module de communication cellulaire (17) étant configuré pour communiquer avec le serveur de partage d'image (1) par l'intermédiaire dudit réseau cellulaire (19),
- émettre une requête de chargement (104) en direction du serveur de stockage d'image (13) à travers le réseau privé virtuel (12), en réponse à la réception du message d'information (103), la requête de chargement (104) comportant l'adresse de la nouvelle image,
- recevoir la nouvelle image, depuis le serveur de stockage d'image (13) à travers le réseau privé virtuel (12),
- stocker la nouvelle image dans le module de stockage d'image (9).

2. Cadre photo connecté (8) selon la revendication 1, dans lequel la carte SIM (18) est de type SIM M2M.

3. Cadre photo connecté (8) selon l'une quelconque des revendications 1 à 2, dans lequel le module de chargement d'image est configuré pour, en réponse à la réception de la nouvelle image, afficher immédiatement à l'écran (14) la nouvelle image.

4. Cadre photo connecté (8) selon l'une quelconque des revendications 1 à 34, comportant en outre une interface de réponse configurée pour, en réponse à une action d'un utilisateur destinataire sur le cadre photo connecté (8), envoyer un message de réponse (108) au serveur de partage d'image (1), le message de réponse (108) comportant un identifiant d'une image à laquelle la réponse est associée ou un identifiant d'abonné expéditeur d'une image à laquelle la réponse est associée.

5. Procédé de partage d'image comportant
- recevoir, d'un smartphone (7), une requête d'affichage d'image (100) comportant une adresse d'affichage et une image,
- déterminer que l'adresse d'affichage est associée à un cadre photo connecté (8) selon l'une quelconque des revendications précédentes, disposant d'une adresse IP statique privée,
- transmettre à un serveur de stockage d'image (13), une requête de stockage (101) comportant l'image,
- recevoir depuis le serveur de stockage d'image un message de réception (102), le message de réception (102) comportant une adresse de stockage de l'image dans le serveur de stockage d'image, et
- à travers un réseau cellulaire (19) supportant un réseau privé virtuel (12), transmettre, à une adresse IP statique associée au cadre photo connecté (8), un message d'information (103) comportant l'adresse de stockage de l'image, le réseau cellulaire (19) comportant au moins un réseau d'accès radio cellulaire par lequel le cadre photo (8) est connecté,
- recevoir à une adresse IP statique configurée pour appartenir à un réseau privé virtuel (12), depuis un serveur de partage d'image (1), à travers le réseau privé virtuel (12), un message d'information (103) comportant une adresse de stockage d'une nouvelle image dans le serveur de stockage d'image (13), l'adresse IP statique étant associée par le réseau d'accès radio cellulaire à un identifiant IMSI correspondant, stocké dans une mémoire non volatile d'une carte SIM (18) d'un module de communication cellulaire (17) du cadre photo connecté (8),
- émettre une requête de chargement (104) en direction du serveur de stockage d'image (13) à travers le réseau privé virtuel (12), en réponse à la réception du message d'information (103), la requête de chargement (104) comportant l'adresse de la nouvelle image,
- recevoir la nouvelle image, depuis le serveur de stockage d'image (13) à travers le réseau privé virtuel (12), et
- stocker la nouvelle image dans un module de stockage d'image (9) et/ou afficher la nouvelle image sur un écran (14);
le procédé comprenant optionnellement en outre une étape consistant à sélectionner plusieurs adresses d'affichage dans un carnet d'adresse.

6. Système de partage d'image, susceptible de mettre en oeuvre le procédé selon la revendication 5, comprenant :
- Un ensemble d'au moins un cadre photo connecté (8) selon l'une quelconque des revendications 1 à 5, connecté à un réseau virtuel privé (12) ;
- Un serveur de partage d'image (1) comportant :
o une interface récepteur (2) configurée pour recevoir dudit ensemble d'au moins un smartphone (7) une requête d'affichage d'image (100) sur un ensemble d'au moins un cadre photo connecté (8) disposant d'une adresse IP statique privée (8), la requête d'affichage d'image comportant une ou plusieurs adresses d'affichage et une image,
o un module de stockage de données (3) stockant un répertoire de cadres photo connectés (8), ledit répertoire comportant des adresses IP statiques dans le réseau privé virtuel (12), lesdites adresses IP statiques étant respectivement associées à une pluralité de cadres photo connectés (8),
o un module de mise à disposition d'images (4), fermé, adressable et configuré pour, en réponse à la réception de la requête d'affichage d'image:
▪ déterminer que l'adresse d'affichage correspond à une adresse IP statique présente dans le répertoire des cadres photo connectés (8) et associée à un ensemble d'au moins un cadre photo connecté (8),
▪ transmettre à un serveur de stockage d'image (13), une requête de stockage (101) comportant l'image,
▪ recevoir depuis le serveur de stockage d'image un message de réception (102), le message de réception (102) comportant une adresse de stockage de l'image dans le serveur de stockage d'image, et
▪ à travers le réseau privé virtuel (12), transmettre, à l'adresse IP statique associée à l'ensemble d'au moins un cadre photo connecté (8), un message d'information (103) comportant l'adresse de stockage de l'image.

7. Système selon la revendication 6, dans lequel le message d'information (103) est transmis en réponse à la réception dudit message de réception (102).

8. Système selon la revendication 6 ou 7, dans lequel le répertoire de cadres photo connectés (8) comporte des associations entre les adresses d'affichage et les adresses IP statiques.

9. Système selon la revendication 8, dans lequel le répertoire de cadres photo connectés (8) comporte un enregistrement pour chacun des cadres photo connectés (8), ledit enregistrement comportant un identifiant de cadre photo connecté (8) et une adresse IP statique associée au cadre photo connecté (8), et dans lequel l'identifiant de cadre photo connecté (8) est associé par un encodage à une adresse d'affichage, le serveur de partage d'image comportant un module de décodage configuré pour décoder l'adresse d'affichage reçue dans la requête d'affichage d'image pour retrouver un identifiant de cadre photo connecté (8) dans le répertoire de cadres photo connectés (8).

10. Système selon la revendication 9, dans lequel l'identifiant de cadre photo connecté (8) est un numéro IMEI du cadre photo connecté (8).

11. Système selon l'une quelconque des revendications 6 à 4210, dans lequel l'adresse de stockage de l'image est une URL

12. Système selon l'une quelconque des revendications 6 à 11, comportant en outre un module de traitement d'image (17) configuré pour traiter l'image reçue dans la requête d'affichage d'image de sorte à générer une image retraitée, l'image envoyée au serveur de stockage d'image (13) étant l'image retraitée.

13. Système selon la revendication 12, dans lequel le répertoire de dispositifs d'affichage comporte en outre des paramètres de dimension d'écran (14) du cadre photo connecté (8), et le module de traitement d'image (17) est configuré pour appliquer à l'image un traitement de redimensionnement en fonction des paramètres de dimension d'écran (14).

14. Système selon l'une quelconque des revendications 6 à 13, dans lequel le serveur de partage d'image (1) comporte en outre un répertoire d'abonné stocké dans le module de stockage de données et un module de gestion de réponses (16) configuré pour :
- recevoir un message de réponse (108), le message de réponse comportant un identifiant d'image ou un identifiant d'abonné expéditeur,
- déterminer (215) à l'aide du répertoire d'abonné que l'identifiant d'image ou l'identifiant d'abonné expéditeur est associé à des informations de contact d'un abonné expéditeur,
- effectuer une action d'information de réponse en fonction des informations de contact de l'abonné expéditeur.

15. Système selon l'une quelconque des revendications 6 à 14, dans lequel l'adresse d'affichage est une première adresse d'affichage et l'adresse IP statique est une première adresse IP statique, le cadre photo connecté (8) est un premier cadre photo connecté (8), la requête d'affichage d'image (100) comportant en outre une deuxième adresse d'affichage, le module de mise à disposition d'images (4) étant en outre configuré pour, en réponse à la réception du message de transmission,
- déterminer que la deuxième adresse d'affichage correspond à une deuxième adresse IP statique présente dans le répertoire des dispositifs d'affichage et associée à un deuxième cadre photo connecté (8),
- à travers le réseau privé virtuel (12), transmettre, à l'adresse associée au deuxième cadre photo connecté (8), le message d'information (103) comportant l'adresse de stockage de l'image.

## Patentansprüche

1. Vernetzter Bilderrahmen (8), umfassend:
- ein Mobilfunkmodul (17), das die Kommunikation des vernetzten Bilderrahmens (8) in einem virtuellen privaten Netzwerk (12) ermöglicht, das von einem Mobilfunknetz (19) unterstützt wird, mit dem der Bilderrahmen (8) verbunden ist; und umfasst eine SIM-Karte (18),
- einen nichtflüchtigen Speicher in der SIM-Karte (18) im Mobilfunkmodul (17), der eine IMSI-Kennung speichert, die einer statischen IP-Adresse entspricht, die dem virtuellen privaten Netzwerk (12) zugeordnet ist, um die Adressierung des angeschlossenen Bilderrahmens (8) zu ermöglichen. Die statische IP-Adresse wird vom Mobilfunknetz mit der IMSI-Kennung verknüpft.
- ein Bildspeichermodul (9) zum Speichern von Bildern,
- einen Bildschirm (14) zum Anzeigen der im Bildspeichermodul gespeicherten Bilder,
- ein Bildlademodul (10), das konfiguriert ist, um:
- von einem Bildfreigabeserver (1) über das virtuelle private Netzwerk (12) eine Informationsnachricht (103) mit der Speicheradresse eines neuen Bildes auf einem Bildspeicherserver (13) des virtuellen privaten Netzwerks (12) zu empfangen, wobei das Mobilfunkmodul (17) konfiguriert ist, um über das Mobilfunknetz (19) mit dem Bildfreigabeserver (1) zu kommunizieren,
- eine Ladeanforderung (104) über das virtuelle private Netzwerk an den Bildspeicherserver (13) zu senden. (12) - als Antwort auf den Empfang der Informationsnachricht (103) die Ladeanforderung (104) mit der Adresse des neuen Bildes,
- Empfang des neuen Bildes vom Bildspeicherserver (13) über das virtuelle private Netzwerk (12),
- Speichern des neuen Bildes im Bildspeichermodul (9).

2. Vernetzter Bilderrahmen (8) nach Anspruch 1, wobei die SIM-Karte (18) vom Typ M2M-SIM ist.

3. Vernetzter Bilderrahmen (8) nach einem der Ansprüche 1 bis 2, wobei das Bildlademodul so konfiguriert ist, dass es nach Empfang des neuen Bildes dieses sofort auf dem Bildschirm (14) anzeigt.

4. Vernetzter Bilderrahmen (8) nach einem der Ansprüche 1 bis 3, ferner umfassend eine Antwortschnittstelle, die so konfiguriert ist, dass sie als Reaktion auf eine Aktion eines empfangenden Benutzers am vernetzten Bilderrahmen (8) eine Antwortnachricht (108) an den Bildfreigabeserver (1) sendet. Die Antwortnachricht (108) enthält die Kennung des Bildes, mit dem die Antwort verknüpft ist, oder die Kennung eines Teilnehmers, der das Bild sendet, mit dem die Antwort verknüpft ist.

5. Verfahren zum Teilen eines Bildes, umfassend:
- Empfangen einer Bildanzeigeanfrage (100) von einem Smartphone (7) mit einer Anzeigeadresse und einem Bild,
- Feststellen, dass die Anzeigeadresse einem angeschlossenen Bilderrahmen (8) gemäß einem der vorhergehenden Ansprüche zugeordnet ist, der eine private statische IP-Adresse besitzt,
- Senden einer Speicheranfrage (101) mit dem Bild an einen Bildspeicherserver (13),
- Empfangen einer Empfangsnachricht (102) vom Bildspeicherserver, wobei die Empfangsnachricht (102) die Speicheradresse des Bildes auf dem Bildspeicherserver enthält, und
- Senden einer Informationsnachricht (103) mit der Speicheradresse des Bildes über ein Mobilfunknetz (19), das ein virtuelles privates Netzwerk (12) unterstützt, an eine dem angeschlossenen Bilderrahmen (8) zugeordnete statische IP-Adresse, wobei das Mobilfunknetz (19) mindestens ein Mobilfunknetz umfasst, über das der Bilderrahmen (8) angeschlossen ist,
- Empfangen einer Nachricht von einem Bildfreigabeserver (1) über das virtuelle private Netzwerk an eine statische IP-Adresse, die so konfiguriert ist, dass sie zu einem virtuellen privaten Netzwerk (12) gehört (12), eine Informationsnachricht (103) mit der Speicheradresse eines neuen Bildes auf dem Bildspeicherserver (13), wobei die statische IP-Adresse vom Mobilfunknetz einer entsprechenden IMSI-Kennung zugeordnet ist, die im nichtflüchtigen Speicher einer SIM-Karte (18) eines Mobilfunkmoduls (17) des angeschlossenen Bilderrahmens (8) gespeichert ist,
- Senden einer Ladeanforderung (104) an den Bildspeicherserver (13) über das virtuelle private Netzwerk (12) als Antwort auf den Empfang der Informationsnachricht (103), wobei die Ladeanforderung (104) die Adresse des neuen Bildes enthält,
- Empfangen des neuen Bildes vom Bildspeicherserver (13) über das virtuelle private Netzwerk (12) und
- Speichern des neuen Bildes in einem Bildspeichermodul (9) und/oder Anzeigen des neuen Bildes auf einem Bildschirm (14);
Das Verfahren umfasst optional außerdem die Auswahl mehrerer Anzeigeadressen aus einem Adressbuch.

6. Bildfreigabesystem zur Umsetzung des Verfahrens nach Anspruch 5, umfassend:
- mindestens einen verbundenen Bilderrahmen (8) nach einem der Ansprüche 1 bis 5, verbunden mit einem privaten virtuellen Netzwerk (12);
Ein Bildfreigabeserver (1) umfasst:
o eine Empfängerschnittstelle (2), die konfiguriert ist, um von mindestens einem Smartphone (7) eine Bildanzeigeanfrage (100) auf mindestens einem verbundenen Bilderrahmen (8) mit einer privaten statischen IP-Adresse (8) zu empfangen, wobei die Bildanzeigeanfrage eine oder mehrere Anzeigeadressen und ein Bild umfasst,
o ein Datenspeichermodul (3), das ein Verzeichnis verbundener Bilderrahmen (8) speichert, wobei das Verzeichnis statische IP-Adressen im virtuellen privaten Netzwerk (12) enthält, die jeweils mehreren verbundenen Bilderrahmen (8) zugeordnet sind,
o ein Bildbereitstellungsmodul (4), das geschlossen, adressierbar und konfiguriert ist, um als Reaktion auf den Empfang der Bildanzeigeanfrage:
- festzustellen, ob die Anzeigeadresse einer statischen IP-Adresse entspricht, die im Verzeichnis verbundener Bilderrahmen (8) vorhanden und mindestens einem verbundenen Bilderrahmen (8) zugeordnet ist,
- eine Speicheranfrage (101) mit dem Bild an einen Bildspeicherserver (13) zu senden,
- vom Bildspeicherserver eine Empfangsnachricht (102) zu empfangen, wobei die Empfangsnachricht (102) mit einer Speicheradresse des Bildes auf dem Bildspeicherserver und
- Über das virtuelle private Netzwerk (12) wird eine Informationsnachricht (103) mit der Speicheradresse des Bildes an die statische IP-Adresse gesendet, die dem mindestens einen angeschlossenen Bilderrahmen (8) zugeordnet ist.

7. Das System nach Anspruch 6, wobei die Informationsnachricht (103) als Antwort auf den Empfang der Empfangsnachricht (102) übermittelt wird.

8. Das System nach Anspruch 6 oder 7, wobei das Verzeichnis der verbundenen Bilderrahmen (8) Verknüpfungen zwischen Anzeigeadressen und statischen IP-Adressen enthält.

9. Das System nach Anspruch 8, wobei das Verzeichnis verbundener Bilderrahmen (8) einen Datensatz für jeden der verbundenen Bilderrahmen (8) umfasst, wobei der Datensatz eine Kennung (8) des verbundenen Bilderrahmens und eine mit dem verbundenen Bilderrahmen (8) verknüpfte statische IP-Adresse umfasst, und wobei die Kennung (8) des verbundenen Bilderrahmens durch Kodierung mit einer Anzeigeadresse verknüpft ist, wobei der Bildfreigabeserver ein Dekodierungsmodul umfasst, das zum Dekodieren der in der Bildanzeigeanforderung empfangenen Anzeigeadresse konfiguriert ist, um eine Kennung (8) des verbundenen Bilderrahmens im Verzeichnis verbundener Bilderrahmen (8) zu finden.

10. Das System nach Anspruch 9, wobei die Kennung des angeschlossenen Bilderrahmens (8) dessen IMEI-Nummer ist.

11. Das System nach einem der Ansprüche 6 bis 10, wobei die Bildspeicheradresse eine URL ist.

12. Das System nach einem der Ansprüche 6 bis 11, ferner umfassend ein Bildverarbeitungsmodul (17), das das in der Bildanzeigeanforderung empfangene Bild verarbeitet, um ein neu verarbeitetes Bild zu erzeugen. Das an den Bildspeicherserver (13) gesendete Bild ist das neu verarbeitete Bild.

13. Das System nach Anspruch 12, wobei das Anzeigegeräteverzeichnis außerdem Bildschirmgrößenparameter (14) des angeschlossenen Bilderrahmens (8) enthält und das Bildverarbeitungsmodul (17) dazu konfiguriert ist, das Bild basierend auf den Bildschirmgrößenparametern (14) zu skalieren.

14. Das System nach einem der Ansprüche 6 bis 13, wobei der Bildfreigabeserver (1) außerdem ein im Datenspeichermodul gespeichertes Teilnehmerverzeichnis und ein Antwortverwaltungsmodul (16) umfasst, das konfiguriert ist, um:
- eine Antwortnachricht (108) zu empfangen, die eine Bildkennung oder eine Absender-Teilnehmerkennung enthält,
- anhand des Teilnehmerverzeichnisses festzustellen (215), ob die Bildkennung oder die Absender-Teilnehmerkennung mit den Kontaktinformationen eines Absender-Teilnehmers verknüpft ist,
- eine Antwortinformationsaktion basierend auf den Kontaktinformationen des Absender-Teilnehmers durchzuführen.

15. System nach einem der Ansprüche 6 bis 14, wobei die Anzeigeadresse eine erste Anzeigeadresse und die statische IP-Adresse eine erste statische IP-Adresse ist, der angeschlossene Bilderrahmen (8) ein erster angeschlossener Bilderrahmen (8) ist, die Bildanzeigeanforderung (100) ferner eine zweite Anzeigeadresse umfasst und das Bildbereitstellungsmodul (4) ferner so konfiguriert ist, dass es als Reaktion auf den Empfang der Übertragungsnachricht Folgendes feststellt:
- feststellt, dass die zweite Anzeigeadresse einer zweiten statischen IP-Adresse entspricht, die im Verzeichnis der Anzeigegeräte vorhanden und einem zweiten angeschlossenen Bilderrahmen (8) zugeordnet ist,
- über das virtuelle private Netzwerk (12) die Informationsnachricht (103) mit der Speicheradresse des Bildes an die dem zweiten angeschlossenen Bilderrahmen (8) zugeordnete Adresse überträgt.

## Claims

1. Connected photo frame (8) comprising:
- a cellular communication module (17) which allows the communication of said connected photo frame (8) in a virtual private network (12) supported by a cellular network (19) by which the photo frame (8) is connected; and comprising a SIM card (18),
- a non-volatile memory in the SIM card (18) in the cellular communication module (17) storing an IMSI identifier corresponding to a static IP address configured to belong to said virtual private network (12), to allow the addressing of the connected photo frame (8), the static IP address being associated by the cellular radio access network with said IMSI identifier,
- an image storage module (9) configured to store images,
- a screen (14) configured to display the images stored in the image storage module,
- an image loading module (10) configured to:
- receive from an image sharing server (1), through the virtual private network (12), an information message (103) comprising a storage address of a new image in an image storage server (13) of said virtual private network (12), the cellular communication module (17) being configured to communicate with the image sharing server (1) via said cellular network (19),
- transmitting a loading request (104) to the image storage server (13) via the virtual private network (12), in response to receiving the information message (103), the loading request (104) comprising the address of the new image,
- receiving the new image from the image storage server (13) via the virtual private network (12),
- storing the new image in the image storage module (9).

2. Connected photo frame (8) according to claim 1, wherein the SIM card (18) is of the M2M SIM type.

3. Connected photo frame (8) according to any one of claims 1 to 2, wherein the image loading module is configured to, in response to receiving the new image, immediately display the new image on the screen (14).

4. Connected photo frame (8) according to any one of claims 1 to 3, further comprising a response interface configured to, in response to an action by a recipient user on the connected photo frame (8), send a response message (108) to the image sharing server (1), the response message (108) comprising an identifier of an image with which the response is associated or an identifier of a subscriber sending an image with which the response is associated.

5. A method for sharing an image comprising
- receiving, from a smartphone (7), an image display request (100) comprising a display address and an image,
- determining that the display address is associated with a connected photo frame (8) according to any one of the preceding claims, having a private static IP address,
- transmitting to an image storage server (13), a storage request (101) comprising the image,
- receiving from the image storage server a reception message (102), the reception message (102) comprising a storage address of the image in the image storage server, and
- through a cellular network (19) supporting a virtual private network (12), transmitting, to a static IP address associated with the connected photo frame (8), an information message (103) comprising the storage address of the image, the cellular network (19) comprising at least one cellular radio access network by which the photo frame (8) is connected,
- receiving at a static IP address configured to belong to a virtual private network (12), from an image sharing server (1), through the virtual private network (12), an information message (103) comprising a storage address of a new image in the image storage server (13), the static IP address being associated by the cellular radio access network with a corresponding IMSI identifier, stored in a non-volatile memory of a SIM card (18) of a cellular communication module (17) of the connected photo frame (8),
- transmitting a loading request (104) to the image storage server (13) through the virtual private network (12), in response to the reception of the information message (103), the loading request (104) comprising the address of the new image,
- receiving the new image, from the image storage server (13) through the virtual private network (12), and
- storing the new image in a storage module image (9) and/or displaying the new image on a screen (14);
the method optionally further comprising a step of selecting several display addresses from an address book.

6. Image sharing system, capable of implementing the method according to claim 5, comprising:
- A set of at least one connected photo frame (8) according to any one of claims 1 to 5, connected to a private virtual network (12);
- An image sharing server (1) comprising:
o a receiver interface (2) configured to receive from said set of at least one smartphone (7) an image display request (100) on a set of at least one connected photo frame (8) having a private static IP address (8), the image display request comprising one or more display addresses and an image,
o a data storage module (3) storing a directory of connected photo frames (8), said directory comprising static IP addresses in the virtual private network (12), said static IP addresses being respectively associated with a plurality of connected photo frames (8),
o an image provision module (4), closed, addressable and configured to, in response to receiving the image display request:
- determine that the display address corresponds to a static IP address present in the directory of connected photo frames (8) and associated with a set of at least one connected photo frame (8),
- transmit to an image storage server (13), a storage request (101) comprising the image,
- receiving from the image storage server a reception message (102), the reception message (102) comprising a storage address of the image in the image storage server, and
- through the virtual private network (12), transmitting, to the static IP address associated with the set of at least one connected photo frame (8), an information message (103) comprising the storage address of the image.

7. The system of claim 6, wherein the information message (103) is transmitted in response to receipt of said receipt message (102).

8. The system of claim 6 or 7, wherein the directory of connected photo frames (8) includes associations between display addresses and static IP addresses.

9. The system of claim 8, wherein the directory of connected photo frames (8) comprises a record for each of the connected photo frames (8), said record comprising a connected photo frame (8) identifier and a static IP address associated with the connected photo frame (8), and wherein the connected photo frame (8) identifier is associated by encoding with a display address, the image sharing server comprising a decoding module configured to decode the display address received in the image display request to retrieve a connected photo frame (8) identifier in the directory of connected photo frames (8).

10. The system of claim 9, wherein the connected photo frame (8) identifier is an IMEI number of the connected photo frame (8).

11. The system of any one of claims 6 to 10, wherein the image storage address is a URL

12. The system according to any one of claims 6 to 11, further comprising an image processing module (17) configured to process the image received in the image display request so as to generate a reprocessed image, the image sent to the image storage server (13) being the reprocessed image.

13. The system according to claim 12, wherein the display device directory further comprises screen size parameters (14) of the connected photo frame (8), and the image processing module (17) is configured to apply a resizing process to the image based on the screen size parameters (14).

14. The system of any one of claims 6 to 13, wherein the image sharing server (1) further comprises a subscriber directory stored in the data storage module and a response management module (16) configured to:
- receive a response message (108), the response message comprising an image identifier or a sender subscriber identifier,
- determine (215) using the subscriber directory that the image identifier or the sender subscriber identifier is associated with contact information of a sender subscriber,
- perform a response information action based on the contact information of the sender subscriber.

15. System according to any one of claims 6 to 14, wherein the display address is a first display address and the static IP address is a first static IP address, the connected photo frame (8) is a first connected photo frame (8), the image display request (100) further comprising a second display address, the image provision module (4) being further configured to, in response to the reception of the transmission message,
- determine that the second display address corresponds to a second static IP address present in the directory of display devices and associated with a second connected photo frame (8),
- through the virtual private network (12), transmit, to the address associated with the second connected photo frame (8), the information message (103) comprising the storage address of the image.
